Europäisches Patentamt

European Patent Office

Office européen des brevets

(19)

(11) Numéro de publication : **0 494 836 B1**

(12) ## FASCICULE DE BREVET EUROPEEN

(45) Date de publication du fascicule du brevet :
**10.11.93 Bulletin 93/45**

(51) Int. Cl.[5] : **C02F 1/52, C02F 1/58**

(21) Numéro de dépôt : **92420007.4**

(22) Date de dépôt : **08.01.92**

(54) **Procédé d'épuration des solutions aqueuses polluées en ions nitrates.**

(30) Priorité : **08.01.91 FR 9100260**

(43) Date de publication de la demande :
**15.07.92 Bulletin 92/29**

(45) Mention de la délivrance du brevet :
**10.11.93 Bulletin 93/45**

(84) Etats contractants désignés :
**AT BE CH DE DK ES FR GB GR IT LI LU NL PT SE**

(56) Documents cités :
**DE-A- 3 711 356**
**CHEMICAL ABSTRACTS, vol. 91, no. 26, 24 Décembre 1979, Columbus, Ohio, US; abstract no. 221583, ASANO,SHUNKICHI ET AL.: 'Synthesis of calcium aluminate hydrates containing various kinds of' page 703 ;colonne L ;**

(56) Documents cités :
**CHEMICAL ABSTRACTS, vol. 111, no. 26, 25 Décembre 1989, Columbus, Ohio, US; abstract no. 238985, BARRINGTON, S.F. ET AL.: 'The enrichment of swine manure through cement kiln dust incorporation' page 375 ;colonne L ;**

(73) Titulaire : **LAFARGE FONDU INTERNATIONAL**
**157 Avenue Charles de Gaulle**
**F-92200 Neuilly-sur-Seine (FR)**

(72) Inventeur : **Letourneux, Jean-Pierre**
**15 Rue Roger Chancel**
**F-26200 Montelimar (FR)**
Inventeur : **Bourdeau, Alain**
**2 Impasse Lafayette**
**F-26700 Pierrelatte (FR)**

(74) Mandataire : **Phélip, Bruno**
**c/o Cabinet Harlé & Phélip 21, rue de La Rochefoucauld**
**F-75009 Paris (FR)**

## Description

L'invention a pour objet un procédé d'épuration des solutions aqueuses polluées en ions nitrates.

L'invention a également pour objet le recyclage des composés solides issus du procédé d'épuration précité, préférentiellement dans le domaine des engrais quand la teneur en nitrate fixé est suffisante.

L'acide nitrique est l'un des acides minéraux les plus utilisés. L'acide nitrique s'utilise à très grande échelle dans l'industrie chimique, en majeure partie pour la fabrication d'engrais artificiels, sous la forme notamment de nitrate d'ammonium. L'acide nitrique a en outre une importance très grande dans la synthèse de nombreux explosifs.

Les sels de l'acide nitrique, les nitrates, sont aussi bien connus et largement utilisés dans l'industrie chimique et métallurgique.

L'utilisation d'acide nitrique, ou de ses sels, s'accompagne, dans la plupart des cas, de rejets d'effluents contenant des ions nitrates. L'industrie rejette également diverses autres formes d'azote qui peuvent être transformées en nitrates : de l'azote ammoniacal est rejeté notamment par les cokeries et des composés organiques azotés sont rejetés notamment par les industries agro-alimentaires.

Les nitrates peuvent avoir une origine naturelle, telle que sous la forme de gisements de sels, généralement du nitrate de sodium.

Les nitrates peuvent également être issus de la transformation de l'azote ammoniacal par nitrification par voie biochimique. Les lisiers constituent l'une des matières premières les plus riches en azote ammoniacal : l'azote présent dans les lisiers l'est pour moitié environ sous forme organique et pour moitié environ sous forme ammoniacale (soit de l'ordre de 2 à 3,5 g/l de $NH_4^+$). Dans des proportions plus faibles, les eaux résiduaires urbaines contiennent également de l'azote ammoniacal qui peut aussi être transformé en nitrates par voie biochimique.

Pour effectuer la nitrification par voie biochimique, il peut être suffisant d'aérer le lisier quand ce dernier comporte naturellement les bactéries appropriées. L'azote présent dans les lisiers ne se modifie que très peu lors du stockage du lisier ; tout au plus assiste-t-on à une légère perte par dégazage d'ammoniaque. L'épandage sur le sol provoque une minéralisation de la matière organique facilement décomposable et une nitrification de $NH_4^+$. Les nitrates produits peuvent être utilisés par les végétaux, assimilés par les micro-organismes, ou lessivés en profondeur dans le sol, au-delà de la zone d'absorption racinaire ; ils sont alors perdus pour la plante et contribuent à plus ou moins long terme à la pollution des nappes.

Qu'ils soient d'origine synthétique ou naturelle, quelle que soit la nature chimique du contre-anion, les nitrates sont, pour la plupart, solubles dans les milieux aqueux dans des proportions élevées. A titre d'exemple, on peut donner la solubilité dans l'eau du nitrate de calcium, $Ca(NO_3)_2$, qui atteint 1,212 kg par litre à 18°C et celle du nitrate de sodium, $NaNO_3$ qui atteint 0, 921 kg par litre à 25°C.

La présence de quantité de plus en plus importante de nitrates dans le milieu naturel constitue actuellement un sujet préoccupant. On sait que, pris par petites doses répétées, les nitrates sont potentiellement toxiques à cause de la transformation possible des nitrates en nitrites, qui peut provoquer une méthémoglobinémie qui peut être fatale chez les jeunes enfants, et en nitrosamines réputées être cancérigènes. Pour cette raison, les médecins recommandent de ne donner aux jeunes enfants que des eaux exemptes d'ions nitrates. Or, en raison de leur solubilité élevée dans les milieux aqueux, la concentration des nitrates, provenant aussi bien de rejets d'effluents de l'industrie, des eaux résiduaires urbaines ou d'engrais chimiques ou naturels (épandage des lisiers), augmente progressivement dans les eaux de surface et les nappes phréatiques qui, pour certaines, sont devenues impropres à la consommation humaine.

La concentration en nitrate est limitée à 50 mg par litre dans l'eau potable en France et dans la communauté européenne en général. Toutefois, en raison du manque de station d'épuration adaptée à l'élimination des nitrates sur le territoire national, on trouve, dans certaines eaux potables offertes à la distribution, des concentrations en ions nitrates pouvant aller jusqu'à 100 mg par litre.

Pour résoudre ce problème, différents procédés d'épuration sont actuellement utilisés pour le traitement des eaux destinées à la consommation humaine. Mais, il n'existe pas de procédé économiquement intéressant et industrialisable pour le traitement des effluents fortement pollués en nitrates tels que les lisiers.

Un premier type de procédé utilisé pour obtenir des eaux potables, par voie physico-chimique, propose d'éliminer les ions nitrates par dénitratation par résine échangeuse d'ions.

Ce procédé nécessite une eau possédant un taux de matières solides en suspension inférieur à 1 mg par litre, sinon l'eau à traiter doit préalablement subir un tamisage suivi d'une ou de plusieurs floculation(s) et filtration(s) et/ou décantation(s). La résine échangeuse d'ions retient les ions nitrates ainsi que les ions sulfates, les ions chlorure et les ions hydrogénocarbonates. Un principal inconvénient de ce procédé réside dans le fait qu'il ne peut être utilisé si il y a trop d'ions sulfates et d'ions chlorures dans l'eau qui ont respectivement une affinité très supérieure et voisine de celle des nitrates pour les résines. La régénération des résines étant généralement faite par du chlorure de sodium, on a une substitution des ions nitrates par des ions chlorures au cours du procédé d'épuration. Il en résulte une augmentation de la teneur en ions chlorures dans les eaux traitées par ce procédé.

Un autre inconvénient majeur de ce procédé réside dans la destination des éluats obtenus après régénération des résines. Que faire en effet de ces éluats riches en chlorures, nitrates et souvent en sulfates ? Si les concentrations ne sont pas trop élevées, ils partent à la rivière la plus proche. Dans les autres cas, ils sont soit envoyés à la station d'épuration biologique la plus proche, soit stockés.

Un autre type de procédé, par voie biologique, propose d'éliminer les ions nitrates à l'aide de bactéries fixées capables de métaboliser ces ions. Usuellement, on utilise des bactéries hétérotrophes tirant leur énergie d'un nutriment carboné tel que l'éthanol ou l'acide acétique. Par ce procédé, les ions nitrates sont transformés en azote gazeux. La prolifération des bactéries conduit à un excès de biomasse ou boue qui peut être traitée avec des boues urbaines ou être incinérée.

Ce procédé ne peut être utilisé qu'à des températures supérieures à 8°-10°C. En outre, ces températures doivent être stables au cours du traitement sinon le pilotage du procédé est complexe. En conséquence ce procédé est relativement coûteux à mettre en oeuvre.

Un but de la présente invention est de proposer un procédé d'épuration des solutions aqueuses polluées en ions nitrates qui soit simple, efficace et relativement peu coûteux à mettre en oeuvre.

Un autre but de l'invention est le recyclage des composés contenant des ions nitrates et résultant de ce procédé, préférentiellement dans le domaine des engrais, sans risque de pollution de l'environnement.

Conformément à l'invention, pour atteindre ces buts, on prévoit un procédé d'épuration des solutions aqueuses polluées en ions nitrates, caractérisé en ce qu'il consiste à précipiter des nitro-aluminates de calcium hydratés, doubles ou mixtes, tels que notamment le mononitroaluminate de calcium hydraté - $3CaO,Al_2O_3,Ca(NO_3)_2,nH_2O$ - par addition, dans les solutions à traiter, d'au moins un agent faisant apport de l'élément aluminium, cet agent étant appelé "alumine active", et d'au moins un agent faisant apport de l'élément calcium, le rapport molaire global de l'élément aluminium sur nitrate, $Al/NO_3$, étant supérieur à 1, le rapport molaire global de calcium sur nitrate, $Ca/NO_3$, étant supérieur à 2, en ce que la réaction de précipitation est effectuée sous agitation, à pH basique, de préférence supérieur à 10,5, et en ce que, éventuellement, on élimine le précipité obtenu, par exemple, par floculation suivi d'une ou de plusieurs décantation(s) et/ou filtration(s).

Malgré la diversité des composés contenus dans les solutions à traiter, et donc les réactions qui peuvent entrer en compétition avec la formation de nitro-aluminates de calcium hydratés, l'élimination des ions nitrates à l'aide du procédé selon l'invention est tout à fait satisfaisante.

Le procédé selon l'invention est avantageux à plus d'un titre : outre un piégeage d'une proportion importante des ions nitrates sous la forme de nitro-aluminates de calcium hydratés, doubles ou mixtes, ce procédé permet d'éliminer une grande part des cations indésirables sous la forme d'hydroxyde ainsi que les anions indésirables formant des précipités insolubles en présence de l'élément calcium ou formant des aluminates de calcium complexes tels que les carbonates, les sulfates et les chlorures.

Avantageusement, le procédé selon l'invention est mis en oeuvre à température ambiante, c'est-à-dire à des valeurs inférieures à 20°C ou de l'ordre de 30 à 40°C selon les saisons. De préférence, le procédé selon l'invention est mis en oeuvre à une température de l'ordre de 20°C, et de préférence encore à une température inférieure à 20°C : dans ces conditions, bien que la cinétique de démarrage de la réaction soit plus lente, en revanche, les rendements à ces températures sont meilleurs.

Eventuellement, préalablement à la séparation des ions nitrates, on peut effectuer différents traitements chimiques pour éliminer d'autres composés indésirables compris dans les effluents à traiter.

Dans le cas où les effluents à traiter comprennent des matières solides en suspension, on peut effectuer une ou plusieurs précipitation(s) de ces matières par floculation, par exemple à l'aide d'un ajout de chlorure ferrique et d'une base, ou à l'aide de sulfate d'aluminium, ou encore à l'aide d'agent floculant organique tel que les polyacrylamides, cette précipitation étant suivie d'une ou de plusieurs opération(s) de filtration et/ou décantation.

Dans le cas où les effluents à traiter comprennent des anions ou éléments indésirables formant des sels de calcium insolubles, on effectue avantageusement une précipitation de ces éléments par l'addition d'un agent faisant apport de l'élément calcium, puis on élimine les phases précipitées obtenues avant de procéder à l'élimination des nitrates.

De préférence, on effectue cette précipitation à l'aide de chaux. Cette opération a pour résultat d'abaisser la concentration des anions peu solubles sous forme de sels de calcium tels que les sulfates, phosphates, carbonates, fluorures, etc..... L'élimination de ces anions permet de limiter la formation d'autres aluminates complexes, parallèlement aux nitroaluminates de calcium hydratés.

Dans le cas où les effluents à traiter comprennent des cations ou éléments indésirables formant des hydroxydes peu solubles ou insolubles, on effectue avantageusement une précipitation de ces éléments par l'addition d'un agent basique. De préférence, on effectue cette précipitation à l'aide de chaux. Cette opération a pour résultat d'abaisser la concentration des anions peu solubles sous forme de sels de calcium ainsi que celle des cations peu solubles, tels que le plomb,... sous forme d'hydroxyde. Après élimination des phases précipitées obtenues, on procède à l'élimination des nitrates.

Le procédé selon l'invention peut être conduit à partir de différentes sources d'alumine active mise en oeuvre seule ou en combinaison. A titre d'exemple, on peut citer les aluminates, et notamment les aluminates alcalins, les aluminates de calcium constitutifs de certains ciments, tels que le $CA_2$, $CA$, $C_{12}A_7$, $C_3A$, aluminoferrites de calcium. Dans les différentes formules précitées et dans la suite de la description :

C représente CaO

A représente $Al_2O_3$

H représente $H_2O$.

Parmi les aluminates de calcium, on utilise de préférence ceux obtenus par un procédé de frittage plutôt que ceux obtenus par un procédé de fusion. En effet, les aluminates de calcium issus d'un procédé de frittage présentent généralement une meilleure aptitude à être broyés ainsi qu'une plus grande réactivité.

Les aluminates de calcium hydratés, tels que $C_4AH_{13}$, peuvent également conduire à la formation d'aluminates complexes, par échange d'ions. Conviennent également les ciments alumineux de dénomination commerciale FONDU, SECAR, LDSF, ainsi que le cubique -T : ce dernier est un aluminate de calcium cubique $C_3AH_6$ décomposé thermiquement à environ 300°C en $C_{12}A_7$ et $Ca(OH)_2$. Ce produit présente directement la stoechiométrie nécessaire à la formation des aluminates complexes (C/A=3) dans le cas d'une réaction avec un sel de calcium.

De préférence encore, on utilise des produits comprenant $C_3A$ et/ou $C_{12}A_7$, mis en oeuvre seuls ou en combinaison avec d'autres composés, avec lesquels on a observé de fortes réactivités ainsi que des rendements élevés dans des délais courts, de l'ordre de 1 à 3 heures.

Les rendements sont encore améliorés quand on emploie comme réactifs $C_3A$ et CaO.

Les meilleurs rendements et réactivités ont été atteints en utilisant comme réactif $C_4A$ qui correspond au produit de la fabrication de $C_3A$ en présence d'un excès de chaux.

Il est préférable de se rapprocher de la stoechiométrie théorique dans les premiers moments de la formation des nitroaluminates de calcium. Cette stoechiométrie correspond à C/A = 4 dans le cas général, et à C/A = 3 pour le traitement de solution de sel de calcium.

L'agent faisant apport de l'élément calcium peut être de la chaux ou un aluminate de calcium complété si nécessaire avec un second agent faisant apport de l'élément calcium tel que la chaux.

Avantageusement, la réaction d'épuration des solutions aqueuses polluées en nitrates selon l'invention est initiée grâce à l'ajout de nitro-aluminate de calcium hydraté, double ou mixte, au début de la réaction, à raison d'environ 10 à 50 % en poids rapporté au poids d'aluminate de calcium introduit.

Dans ces conditions, on a en effet observé une amélioration de la vitesse de formation des nitro-aluminates de calcium hydratés, doubles ou mixtes, et principalement durant la phase initiale de cette réaction, ainsi que celle du rendement de précipitation des nitrates. On utilise avantageusement comme germe le nitro-aluminate de calcium hydraté, double ou mixte, qui doit principalement être formé au cours de la réaction.

Le procédé selon l'invention, ainsi que les différentes variantes de ce procédé présentées ci-dessus, trouvent un champ d'application particulièrement intéressant pour traiter les eaux chargées en nitrates, et éventuellement en d'autres composés minéraux, tels que les effluents de l'industrie et les eaux résiduaires urbaines, ainsi que les milieux chargés en azote ammoniacal susceptible de se transformer en nitrates tels que les lisiers.

Quand la solution à traiter est une solution riche en azote sous forme ammoniacale et sous forme organique, la présente invention permet de réduire considérablement, voire d'éliminer, le pouvoir polluant de ces solutions. Sont notamment concernées, les matières premières telles que les lisiers qui génèrent des solutions riches en nitrates par nitrification.

Les lisiers, en particulier, sont actuellement simplement répandus à l'état brut : leur teneur élevée en azote soluble, essentiellement sous forme d'ammonium, entraîne des risques de pollution importante, en particulier quand ils sont épandus en dehors des périodes de l'année où les plantes assimilent des quantités importantes de nitrates nécessaires pour leur croissance. Grâce à un traitement simple des lisiers, préalablement à l'épandage et conformément au procédé selon l'invention, on conserve et/ou on améliore les qualités de fertilisant des lisiers tout en éliminant avantageusement leur pouvoir polluant.

Selon un premier mode préféré de réalisation de l'invention, qui vise particulièrement le traitement des solutions ou suspensions comprenant de l'azote sous forme ammoniacale tels que les lisiers, on effectue successivement les étapes suivantes :

1) on transforme en nitrates l'azote ammoniacal, présent dans les solutions à traiter, par voie biochimique en présence d'oxygène. Pour ce faire, on peut procéder de la manière suivante : on aère les solutions riches en azote ammoniacal, telles que les lisiers, et si nécessaire, on ensemence ces solutions avec des micro-organismes nitrifiants pour provoquer la nitrification.

2) ensuite, dès lors que la majorité de l'azote ammoniacal est transformée en nitrates, on ajoute à la solution à traiter un ou plusieurs aluminates de calcium de sorte que le rapport molaire global d'aluminium sur nitrate, Al/NO$_3$, soit supérieur à 1 et que le rapport molaire global de calcium sur nitrate, Ca/NO$_3$, soit supérieur à 2, et on ajoute, si nécessaire, de la chaux et/ou un autre agent basique pour ajuster le pH à une valeur basique, de préférence à une valeur supérieure à 10,5 et on effectue la réaction de précipitation sous agitation et à température ambiante.

3) on recueille, après séparation, par exemple par décantation ou filtration, une suspension épaisse ou un solide qui sont avantageusement utilisés comme amendement et engrais pour les sols agricoles.

4) on recueille enfin un effluent liquide appauvri en nitrates, dont le caractère polluant est grandement minimisé comparativement au lisier de départ. C'est pourquoi son rejet dans l'environnement peut être envisagé sans risque.

Outre une élimination d'une grande part des ions nitrates, ainsi que des ions formant des hydroxydes insolubles et des sels de calcium insolubles, le procédé selon l'invention, à la différence des procédés connus, quand il est appliqué au traitement des excréments liquides tels que les lisiers, présente l'avantage de produire des effluents liquides, limpides, décolorés et désodorisés.

Or, les excréments liquides comprennent des composés organiques d'origine biliaire, qui sont très colorés et dont la coloration varie entre les teintes jaunes et brunes, et qui par ailleurs, se biodégradent difficilement. On peut donc penser que ces composés organiques colorés sont fixés dans le précipité mononitroaluminate de calcium hydraté et/ou les autres précipités qui accompagnent avantageusement la formation de ce précipité, à savoir des hydroxydes insolubles et des sels de calcium insolubles.

La basicité des suspensions ou solides obtenus à l'issue de l'étape (3) peut permettre de corriger un sol acide. De plus, leur teneur en nitrate faiblement soluble permet d'apporter l'engrais nitrate au fur et à mesure de sa consommation par les végétaux et supprime ainsi une source de pollution des nappes phréatiques et des eaux de ruissellement.

La nitrification selon l'étape (1) consiste à transformer l'azote ammoniacal en nitrate, par voie biochimique, en présence de bactéries nitrifiantes et d'oxygène, apporté de préférence par aération. Cette transformation est effectuée selon des conditions opératoires classiques. Elle s'effectue généralement en deux stades par des microorganismes autotrophes :

- oxydation de l'azote ammoniacal en nitrite par des micro-organismes appropriés. A titre d'exemple, on peut citer les micro-organismes du genre Nitrosomonas,
- suivie d'une oxydation des nitrites en nitrates par des micro-organismes appropriés. A titre d'exemple, on peut citer les micro-organismes du genre Nitrobacter.

On peut trouver les micro-organismes nitrifiants dans des boues des stations d'épuration des eaux ou encore dans des lisiers partiellement ou totalement nitrifiés.

La vitesse de nitrification dépend en particulier de la température, du pH, que l'on maintient de préférence entre 7,2 et 8, et de la quantité d'oxygène dont peuvent disposer les micro-organismes. Egalement, il importe de veiller que le milieu de la réaction de nitrification ne contienne pas des composés organiques ou minéraux pouvant modifier voire inhiber la croissance des micro-organismes. Pour plus de précision quant aux conditions nécessaires lors de la nitrification, on pourra se reporter à l'ouvrage intitulé "Mémento technique de l'eau", 9ème édition, tome 1, pp. 300-301, édité par la société DEGREMONT.

Avantageusement, l'ajustement à un pH basique pour les besoins de la réaction de précipitation de l'étape (2) est effectué à l'aide de potasse, afin de conduire à des boues résiduaires riches en potassium, augmentant leur intérêt comme engrais.

Avantageusement, avant de précipiter des nitro-aluminates de calcium hydratés, doubles ou mixtes (étape (2) du premier mode de réalisation), soit avant ou après l'étape (1) de nitrification, on sépare, au moins partiellement, les matières solides comprises dans les lisiers, généralement par floculation suivie d'une filtration et/ou décantation. Parmi les matières solides, on récupère des matières riches en protéines, des phosphates et des composés azotés peu solubles dans l'eau.

De préférence, la séparation des matières solides comprises dans les lisiers est effectuée avant l'étape (1) de nitrification. Sinon, les matières solides, auxquelles correspond une certaine demande biochimique en oxygène (DBO), entrent en compétition avec la réaction de nitrification et naturellement la défavorisent. Le filtrat constituant le lisier clarifié est ensuite soumis :

- au traitement de nitrification selon l'étape (1) dans le cas où ce traitement n'a pas été réalisé auparavant ;
- puis au traitement de précipitation des nitrates conformément aux étapes (2) et (3).

Les meilleurs rendements de précipitation des nitrates ont été obtenus dans ces conditions.

Eventuellement, on sépare les matières solides de la suspension obtenue à l'issue de l'étape (3), par exemple par floculation suivie d'une filtration et/ou décantation. On recueille d'une part un filtrat appauvri en nitrates, qui se présente sous la forme d'une solution limpide et pratiquement inodore pouvant être épandue ou servir à l'irrigation, et d'autre part des matières solides contenant des nitroaluminates de calcium hydratés, doubles ou mixtes, qui trouvent application comme fertilisant. On a en effet montré, à l'aide d'expériences agronomiques, que les ions nitrates sont piégés momentanément dans les matières solides sous forme de nitroaluminates de calcium hydratés, doubles ou mixtes, mais restent disponibles pour les plantes et assimilables par celles-ci.

L'application pratique du procédé selon l'invention au traitement des lisiers peut être envisagée selon l'exemple d'installation suivant prévu dans un élevage porcin.

## Installation du procédé

Elle consiste à adapter et compléter l'installation existante en compartimentant la cuve de stockage du lisier. Après adaptation et complément, la nouvelle installation comprend un premier compartiment constitué d'une cuve N de nitrification.

La cuve N de nitrification est équipée d'un système d'aération par micro-bulles (production d'air + diffusion).

Cette installation comprend également un réacteur pour la réaction de précipitation des ions nitrates conformément au procédé selon l'invention, et un système de séparation sel/effluent (type tamis).

On peut compléter l'installation avec un prétraitement du lisier avant nitrification (décantation ou dégrillage et/ou floculation) dans le but de réduire la DBO, donc la consommation d'oxygène du milieu. La floculation peut être réalisée en utilisant un polyacrylamide faiblement cationique.

Le second compartiment de la cuve de stockage existante, appelée cuve S, est utilisé pour stocker l'effluent obtenu après séparation des ions nitrates.

## Fonctionnement

L'alimentation moyenne entrant dans l'installation, en $m^3$ de lisier brut par jour, est fonction du nombre de porcs.

Le prétraitement avant nitrification produit :
- des boues organiques à pourcentage élevé en matières sèches. Ces boues renferment de l'azote organique et la quasi-totalité du phosphore ; elles sont utilisées comme amendement humique sur l'exploitation agricole.
- le lisier à traiter contenant une faible teneur en matières solides en suspension.

## Nitrification

L'alimentation de la cuve de nitrification N est réalisée à l'aide du lisier débarrassé des boues organiques.

Le temps de séjour est adapté en fonction de la vitesse de nitrification.

## Traitement

Les séquences du traitement sont les suivantes:

A intervalles réguliers, un certain volume V1 de lisier nitrifié est prélevé de la cuve N vers le réacteur. Simultanément, on peut transférer un certain volume V2 d'effluent final appauvri en nitrates de la cuve S de stockage de l'effluent vers la cuve N de nitrification afin de maintenir constant le volume dans cette dernière. Les volumes V1 et V2 à traiter sont alors calculés de façon à maintenir constants la concentration en $NO_3$ de la cuve N et le niveau de la cuve N ; il permet d'extraire de cette cuve une quantité de nitrates équivalente à celle formée durant la période considérée.

Dans le réacteur, le lisier à traiter est mis sous agitation et une dose appropriée d'alumine active, et si besoin est, de la chaux est introduite.

Le milieu est maintenu sous agitation pendant la réaction. Après réaction, la suspension de sel de nitrate est extraite du réacteur vers un tamis pour séparer le sel de l'effluent. On pourrait également séparer le sel par simple décantation.

Le sel est stocké en attendant son utilisation comme engrais azoté. L'effluent, appauvri en nitrate (il ne renferme généralement pas plus de 0,3 à 0,5 g/l de $NO_3$) et renfermant la quasi totalité du potassium du lisier est stocké dans la cuve S ; il est utilisé comme engrais par aspersion ou par épandage.

Selon un second mode de réalisation de l'invention, qui vise à traiter les solutions aqueuses comprenant une teneur élevée à moyenne en ions nitrates et de faibles quantités en composés organiques tels qu'un effluent d'industrie ou une eau résiduaire urbaine ou des solutions de régénération de résines échangeuses utilisées dans les stations d'épuration, on utilise avantageusement la seconde variante suivante du procédé selon l'invention :

1) on ajoute à la solution à traiter un ou plusieurs aluminate de calcium de sorte que le rapport molaire global d'aluminium sur nitrate, Al/NO$_3$, soit supérieur à 1 et que le rapport molaire global de calcium sur nitrate, Ca/NO$_3$, soit supérieur à 2 et, si nécessaire, on ajoute également de la chaux et/ou un autre agent basique pour ajuster le pH à une valeur basique, de préférence à une valeur supérieure à 10,5.

2) on effectue la réaction de précipitation sous agitation et à température ambiante.

3) à l'issue de cette réaction, on soumet la suspension obtenue à une opération de décantation et/ou de filtration, après adjonction éventuelle d'un agent floculant.

4) puis, si nécessaire, on neutralise le filtrat obtenu, ce qui a également pour effet de précipiter l'alumine en solution sous la forme d'hydroxyde insoluble.

5) pour finir, on décante et/ou filtre la nouvelle suspension obtenue pour obtenir une eau purifiée qui peut être rejetée dans l'environnement sans risque de pollution.

Si la teneur de cette eau purifiée en nitrate est inférieure à 50 mg par litre et si elle ne comprend pas d'autres éléments ou composés dans des teneurs supérieures à celles imposées par la réglementation, cette eau peut alimenter des réseaux de distribution d'eau potable.

Si la solution à traiter est une eau polluée telle qu'une eau provenant d'aquaculture ou de pisciculture ou une eau résiduaire urbaine comprenant de l'azote ammoniacal, on prévoit avantageusement une opération de nitrification de cette solution du type de celles présentées précédemment.

Au cours de l'étape (1), on peut utiliser comme agent basique la soude, la potasse ou la chaux.

Avantageusement, l'addition d'un agent basique, est effectuée préalablement à l'addition d'aluminate de calcium. Il en résulte ainsi une diminution de la concentration des cations peu solubles sous la forme d'hydroxydes insolubles.

Avantageusement, préalablement à l'addition d'aluminate de calcium, on ajoute dans la solution à traiter, un agent faisant apport de l'élément calcium autre que les aluminates de calcium. Il en résulte ainsi une diminution de la concentration des anions peu solubles sous la forme de sels de calcium tels que les sulfates, phosphates, carbonates, fluorures, etc....

Avantageusement encore, on choisit la chaux comme agent basique et agent faisant apport de l'élément calcium et on l'introduit préalablement à l'aluminate de calcium. La solution subit ensuite le traitement d'élimination des ions nitrates par précipitation après l'élimination des phases précipitées. Ces variantes de procédé permettent de limiter la formation d'autres aluminates complexes, parallèlement au mononitroaluminate.

Dans les étapes de précipitation, on choisit de préférence des agents floculants d'origine naturelle tels que des alginates ou des gommes de xanthanes. Cependant, conviennent également à l'invention des sels tels que le chlorure ferrique ou le sulfate d'aluminium ainsi que des polymères tels que des polyacrylamides.

Avantageusement, les boues résiduaires obtenues dans cette variante du procédé selon l'invention à l'issue de l'étape (3), lorsqu'elles sont riches en nitroaluminates de calcium, peuvent être utilisées comme amendement et engrais pour les sols agricoles. En effet, leur teneur en nitrate faiblement soluble permet d'apporter l'engrais nitrate au fur et à mesure de sa consommation par les végétaux, et supprime ainsi une source de pollution des nappes phréatiques et des eaux de ruissellement. En outre, la basicité de ces boues peut permettre de corriger un sol acide.

Dans le cas où le filtrat est destiné à la préparation d'eau potable ou à être rejeté dans l'environnement, on neutralise avantageusement le filtrat [étape (4)] à l'aide de CO$_2$, afin de précipiter le carbonate de calcium simultanément avec l'hydroxyde d'aluminium.

Conformément au procédé selon l'invention, outre les agents nécessaires à la précipitation des nitrates en solution, les solutions à traiter peuvent recevoir des agents de cristallisation ayant la propriété d'intervenir sur la cinétique de formation des nitro-aluminates, doubles ou mixtes. Ces agents de cristallisation sont constitués, par exemple, par l'un au moins des nitro-aluminates, doubles ou mixtes, précipités, pris seul ou en combinaison.

D'autres caractéristiques et avantages de l'invention apparaîtront à la lecture des exemples qui suivent, donnés à titre illustratif et non limitatif de l'invention.

## Exemples 1 à 3

Dans un réacteur chimique, équipé d'un agitateur magnétique, on introduit une solution aqueuse contenant du nitrate de calcium Ca(NO$_3$)$_2$ : la concentration initiale en nitrates NO$_3^-$ varie entre 500 mg par litre et 125 mg par litre. Dans ces exemples l'alumine active est de l'aluminate de calcium CA en solution aqueuse. L'apport complémentaire de calcium est obtenu par l'ajout de chaux Ca(OH)$_2$.

Le traitement est réalisé par addition simultanée de CA et de Ca(OH)$_2$. Le traitement est réalisé sous agitation. La suspension obtenue est filtrée ou additionnée d'un floculant et décantée. L'analyse des nitrates est ensuite effectuée par électrode spécifique, après ajout d'un tampon et ajustement du pH à 5,5.

Les autres conditions opératoires et les résultats des exemples 1 à 3 sont reportés dans le tableau I ci-dessous.

| Tableau I : | EXEMPLE 1 | EXEMPLE 2 | EXEMPLE 3 |
|---|---|---|---|
| Concentration en NO$_3$ initial (mg/l) | 500 | 125 | 125 |
| Quantité de CA en solution aqueuse (mg/l) | 2844 | 711 | 355 |
| Quantité de Ca(OH)$_2$ (mg/l) | 3696 | 925 | 425 |
| Rapport molaire global Al/NO$_3$ | 4,46 | 4,46 | 2,23 |
| Rapport molaire global Ca/NO$_3$ | 8,93 | 8,92 | 4,71 |
| Durée du traitement (min.) | 15 | 15 | 15 |
| Concentration en NO$_3$ résiduel (mg/l) | 123 | 81 | 96 |
| Rendement (%) | 75 | 35 | 23 |

**Exemples 4 à 6**

Les conditions opératoires de ces exemples sont identiques à celles des exemples 1 à 3, à l'exception de l'agent faisant apport de l'élément aluminium qui est sous forme de C$_3$A.

Les autres conditions opératoires et les résultats de ces exemples sont donnés dans le tableau II ci-dessous :

| Tableau II | EXEMPLE 4 | EXEMPLE 5 | EXEMPLE 6 |
|---|---|---|---|
| Concentration initiale en $NO_3$ (mg/l) | 500 | 250 | 2300 |
| Quantité de $C_3A$ (mg/l) | 4899 | 5000 | 5000 |
| Quantité de $Ca(OH)_2$ | 0 | 0 | 0 |
| Rapport molaire global $Al/NO_3$ | 4,5 | 9,19 | 1,0 |
| Rapport molaire global $Ca/NO_3$ | 7,25 | 14,28 | 2,0 |
| Durée du traitement (min) | 350 (220) | 160 | 1100 |
| Concentration résiduelle en $NO_3$ (mg/l) | 86 (96) | 98 | 480 |
| Rendement (%) | 83,4 % (80,8 %) | 60,8 % | 79,1 % |

**Exemples 7 à 9**

Les conditions opératoires de ces exemples sont identiques à celles des exemples 1 à 3, à l'exception de l'agent faisant apport de l'élément aluminium qui est sous la forme de SECAR 71, ciment réfractaire industriel produit par LAFARGE FONDU INTERNATIONAL. Le SECAR 71 est composé d'environ 70 % d'$Al_2O_3$, d'environ 29 % de CaO et de divers autres oxydes. Les autres conditions opératoires et les résultats de ces exemples sont donnés dans le tableau III ci-dessous :

| Tableau III | EXEMPLE 7 | EXEMPLE 8 | EXEMPLE 9 |
|---|---|---|---|
| Concentration initiale en $NO_3$ (mg/l) | 125 | 500 | 500 |
| Quantité de SECAR 71 (mg/l) | 655 | 2620 | 2620 |
| Quantité de Ca $(OH)_2$ (mg/l) | 1000 | 4000 | 2970 |
| Rapport molaire global Al/$NO_3$ | 4,46 | 4,46 | 4,46 |
| Rapport molaire global Ca/$NO_3$ | 8,91 | 8,91 | 7,19 |
| Durée du traitement (mn) | 300 | 1020 | 1020 |
| Concentration résiduelle en $NO_3$ (mg/l) | 78 | 102 | 169 |
| Rendement (%) | 37,6 % | 79,6 % | 66,2 % |

## Exemples 10 et 11

Les conditions opératoires de ces exemples sont identiques à celles des exemples 1 à 3 à l'exception de l'agent faisant apport de l'élément aluminium qui est sous la forme d'un produit composé de 36 % en poids de $C_3A$, 60 % de $C_{12}A_7$ et 4 % de titanate de calcium : ce produit sera identifié par M dans la suite de ces exemples.

Les autres conditions opératoires et les résultats de ces exemples sont donnés dans le tableau IV suivant :

Tableau IV :

| | EXEMPLE 10 | EXEMPLE 11 |
|---|---|---|
| Concentration en $NO_3$ initial (mg/l) | 500 | 500 |
| Quantité de M (mg/l) | 4390 | 4390 |
| Quantité de $Ca(OH)_2$ (mg/l) | 0 | 965 |
| Rapport molaire global $Al/NO_3$ | 4,45 | 4,45 |
| Rapport molaire global $Ca/NO_3$ | 5,60 | 7,21 |
| Durée du traitement (min.) | 270 | 75 |
| Concentration en $NO_3$ résiduel (mg/l) | 186 | 82 |
| Rendement (%) | 62,8 % | 83,6 % |

On observe que l'augmentation du rapport molaire global $Ca/NO_3$ par l'ajout de chaux permet d'améliorer sensiblement le rendement.

**Exemples 12 et 13**

Les conditions opératoires de ces exemples sont identiques à celles des exemples 1 à 3 à l'exception de l'agent faisant apport de l'élément aluminium qui est un produit composé de 37 % en poids de $C_3A$, 55 % de $C_{12}A_7$ et 8 % de titanate de calcium. Ce produit sera identifié par N dans la suite de ces exemples.

Les autres conditions opératoires et les résultats de ces exemples sont donnés dans le tableau V suivant.

| Tableau V | EXEMPLE 12 | EXEMPLE 13 |
|---|---|---|
| Concentration en $NO_3$ initial (mg/l) | 500 | 500 |
| Quantité de N (mg/l) | 4390 | 4390 |
| Quantité de $Ca(OH)_2$ (mg/l) | 0 | 965 |
| Rapport molaire global $Al/NO_3$ | 4,49 | 4,49 |
| Rapport molaire global $Ca/NO_3$ | 5,58 | 7,19 |
| Durée du traitement (min.) | 540 | 100 |
| Concentration en $NO_3$ résiduel (mg/l) | 187 | 98 |
| Rendement (%) | 62,6 % | 80,4 % |

On observe que l'augmentation du rapport molaire global $Ca/NO_3$ par l'ajout de la chaux, permet d'améliorer sensiblement le rendement.

**Exemple 14**

Cet exemple a pour objet le traitement des lisiers.

Le lisier testé est un lisier de porc.

La nitrification est effectuée par aération du lisier pendant 72 heures avec un barbotage d'air et en présence de micro-organismes nitrifiants.

Après nitrification, ce lisier comprend une concentration initiale en nitrate égale à 3000 mg/litre. On précipite les matières solides en suspension par addition de sulfate d'alumine à raison de 0, 3 g/litre de lisier. Après décantation, on traite le liquide surnageant en ajoutant à ce lisier, sous agitation, une alumine active et de la chaux $Ca(OH)_2$ pendant 30 minutes. La suspension obtenue est filtrée et on mesure la teneur résiduelle en nitrates sur le filtrat après ajout de tampon de force ionique et ajustement du pH à 5,5.

Les autres conditions opératoires et les résultats obtenus sont reportés dans le tableau VI suivant :

| Tableau VI | EXEMPLE 14 |
|---|---|
| Concentration en $NO_3$ initial (mg/l) | 3000 |
| Quantité de Cubique - T utilisée (mg/l) | 14 182 |
| Quantité de $Ca(OH)_2$ (mg/l) | 3 582 |
| Rapport molaire global $Al/NO_3$ | 2 |
| Rapport molaire global $Ca/NO_3$ | 3,5 |
| Durée du traitement (min.) | 30 |
| Concentration en $NO_3$ résiduel (mg/l) | 600 |
| Rendement (%) | 80 % |

Une précipitation préalable des matières en suspension, en particulier de nature protéique, a permis d'obtenir un bon rendement de dénitratation.

**Exemple 15**

A une solution aqueuse contenant du nitrate de calcium à raison de 2000 mg/l d'ions nitrates, on ajoute, par litre de solution, 8,78 g de l'aluminate de calcium identifié par la lettre "N" dans les exemples 12 et 13 et 1,93 g de $Ca(OH)_2$.

Dans ces conditions le rapport molaire global $Al/NO_3$ est égal à 2,25 et le rapport molaire global $Ca/NO_3$ est égal à 3,6.

On suit en fonction du temps de réaction, l'évolution du pH et de la concentration de nitrates en solution à l'aide d'une électrode spécifique après ajout d'un tampon et ajustement du pH à 5,5.

Les résultats de ces mesures sont reportés dans le tableau VII suivant :

13

| TABLEAU VII - EXEMPLE 15 | | |
|---|---|---|
| Temps (min.) | $(NO_3)$ (mg/l) | pH |
| 15 | 1251 | 12,00 |
| 30 | 1065 | 12,03 |
| 45 | 1005 | 12,04 |
| 75 | 754 | 12,00 |
| 105 | 579 | 11,87 |
| 135 | 521 | 11,82 |

Le rendement de la réaction de précipitation des ions nitrates après 135 minutes de réaction est de 75 %.

## Exemple 16

A une solution aqueuse contenant 1608 mg par litre de nitrate, on ajoute 8,78 g par litre de l'aluminate de calcium identifié par la lettre "N" dans les exemples 12 et 13 et 1,93 g par litre de $Ca(OH)_2$.

Après cinq minutes de réaction, on ajoute 5 g de mononitroaluminate de calcium hydraté - $3CaO$, $Al_2O_3$, $Ca(NO_3)_2$, $nH_2O$ - à 46 % en poids d'extrait sec.

Dans les conditions de cet essai, le rapport molaire global $Al/NO_3$ est égal à 2,8 et le rapport molaire global $Ca/NO_3$ est égal à 4,5.

L'évolution du pH et de la concentration en nitrates selon la méthode de mesure utilisée dans le précédent exemple, sont suivis en fonction du temps de réaction.

Les résultats sont reportés dans le tableau VIII suivant :

| TABLEAU VIII - EXEMPLE 16 | | |
|---|---|---|
| Temps (min) | $(NO_3)$ (mg/l) | pH |
| 15 | 438 | - |
| 30 | 289 | 11,82 |
| 45 | 241 | 11,85 |
| 60 | 171 | 11,79 |
| 90 | 123 | 11,80 |
| 150 | 93 | 11,75 |

Le rendement de la réaction de précipitation des ions nitrates est égal à 94 % après 150 minutes.

**Exemple 17**

Cet exemple a pour objet un traitement de lisier de porc.

Dans une première étape, on procède à une clarification du lisier par élimination des matières solides. Pour ce faire, on effectue une floculation en ajoutant un polyacrylamide de dénomination commerciale PROSEDIM CS 284, à raison de 75 mg/l pour précipiter les matières protéiques et les phosphates, et on élimine les matières solides par décantation. Le surnageant clarifié est ensuite nitrifié.

La nitrification est réalisée par aération et ensemencement du lisier à traiter par addition d'un lisier en cours de nitrification et donc renfermant des micro-organismes nitrifiants.

Après nitrification, ce lisier comprend une concentration initiale en nitrate égale à 2737 mg/l.

On précipite les nitrates sous forme de mononitroaluminate de calcium par ajout d'aluminate de calcium identifié sous la lettre "N" dans les exemples 12 et 13, ainsi que de $Ca(OH)_2$.

Régulièrement au cours de la réaction, la suspension obtenue est filtrée et on mesure les teneurs résiduelles en nitrate, ions chlorures, ions phosphates $HPO_4^{2-}$ et ions sulfates $SO_4^{2-}$ sur le filtrat par chromatographie ionique.

Pour réaliser la précipitation, on ajoute 11853 mg/l d'aluminate de calcium désigné par la lettre "N" et 4215 mg/l de $Ca(OH)_2$. Dans ces conditions, le rapport molaire global $Al/NO_3$ est égal à 2, 25 et le rapport molaire global $Ca/NO_3$ est égal à 3,6.

Les résultats de cet essai sont donnés dans le tableau IX suivant :

| Temps (min) | $Cl^-$ (mg/l) | $NO_3^-$ (mg/l) | $HPO_4 =$ (mg/l) | $SO_4 =$ (mg/l) | Rendement (%) |
|---|---|---|---|---|---|
| 0 | 384 | 2737 | 204 | 506 | - |
| 15 | 342 | 2400 | 0 | 84 | 12 % |
| 30 | 469 | 2018 | 0 | 0 | 26 % |
| 45 | 324 | 1515 | 0 | 153 | 45 % |
| 60 | 455 | 1129 | 0 | 59 | 59 % |
| 75 | 448 | 934 | 0 | 32 | 66 % |
| 90 | 262 | 752 | 0 | 0 | 72% |
| 105 | 405 | 688 | 0 | 0 | 75 % |
| 135 | 224 | 553 | 0 | 0 | 80 % |
| 165 | 399 | 520 | 0 | 12 | 81 % |
| 195 | 213 | 501 | 0 | 0 | 82 % |
| 225 | 195 | 470 | 0 | 0 | 83% |

Les résultats des analyses chimiques du lisier nitrifié avant et après précipitation des nitrates sont donnés dans le tableau X suivant :

| ANALYSES CHIMIQUES (mg/l) | | |
|---|---|---|
| | Lisier nitrifié avant séparation des nitrates par précipitation | Effluent final obtenu après précipitation des nitrates et séparation du précipité |
| Al | 5,3 | 31,7 |
| Ca | 427,6 | 191,6 |
| K | 831,8 | 760,8 |
| Na | 148,4 | 150,8 |
| Cu | 3 | 0,035 |
| Zn | 12,5 | nd* |
| Ni | 0,21 | 0,01 |

| Tableau X (suite) | Lisier nitrifié avant séparation des nitrates par précipitation | Effluent final obtenu après précipitation des nitrates et séparation du précipité |
|---|---|---|
| Pb | 0,09 | nd* |
| W | 0,09 | nd* |
| Co | 0,06 | nd* |
| CD | 0,06 | nd* |
| NO$_3$ | 2737 | 470 |
| NH$_4$ | nd* | nd* |
| Cl | 384 | 195 |
| P205 | 89 | nd* |
| SO$_4$ | 506 | nd* |
| pH | 5,8 | 12,2 |
| | | Analyse du précipité (% pondéral) |
| Al$_2$O$_3$ | | 18,00 % |
| CaO | | 39,71 % |
| K$_2$O | | 0,26 % |
| Na$_2$O | | nd* |
| NO$_3$ | | 9,14 % |
| H$_2$O | | 31,71 % |

* nd signifie non détectable.

Outre une élimination importante des nitrates grâce au procédé selon l'invention, on remarque que les éléments Cu et Zn sont en proportion très négligeable dans l'effluent. Ces éléments sont en effet avantageusement fixés dans le précipité.

L'effluent final, appauvri en nitrates, peut être épandu dans la nature sans risque de pollution. Le précipité, riche en nitrate, est avantageusement utilisé comme engrais et épandu à l'époque où la croissance des plantes requiert un apport en azote.

**Exemples 18 et 19**

Dans un réacteur chimique, équipé d'un agitateur magnétique, on introduit une solution aqueuse contenant du nitrate de calcium Ca (NO$_3$)$_2$, à une concentration de 125 mg/l d'ions nitrates. L'agent faisant apport de l'élément aluminium est de l'aluminate de sodium NaAlO$_2$ en solution aqueuse. L'apport complémentaire de calcium est apporté par ajout de chaux Ca(OH)$_2$.

Le traitement est réalisé par addition simultanée de NaAlO$_2$ et Ca(OH)$_2$. Le traitement est réalisé sous agitation. La suspension obtenue est filtrée ou additionnée d'un floculant et décantée. L'analyse des nitrates est effectuée par électrode spécifique.

Les autres conditions opératoires et les résultats de ces exemples sont donnés dans le tableau XI suivant.

| Tableau XI | EXEMPLE 18 | EXEMPLE 19 |
|---|---|---|
| NO$_3$ initial (mg/l) | 125 | 125 |
| NaAlO$_2$ dans la solution (mg/l) | 2950 | 1475 |
| Ca(OH)$_2$ (mg/l) | 5255 | 2590 |
| Rapport molaire Ca/NO$_3$ | 35 | 17,5 |
| Rapport molaire Al/NO$_3$ | 18 | 9 |
| Durée du traitement (min) | 15 | 15 |
| NO$_3$ résiduel (mg/l) | 62 | 114 |
| Rendement (%) | 50 | 8 |

**Exemples 20 et 21**

A une solution aqueuse comprenant 3000 mg/litre de nitrate et correspondant au liquide surnageant obtenu après nitrification et précipitation des matières solides en suspension du lisier présenté dans l'exemple 14, on ajoute un réactif pour éliminer les nitrates sous la forme de nitro-aluminates de calcium hydratés, doubles ou mixtes.

Après réaction, la suspension obtenue est filtrée et on mesure la teneur résiduelle en nitrates sur le filtrat. Les autres conditions opératoires et les résultats obtenus sont reportés dans le tableau XII suivant.

| Tableau XII | Exemple 20 | Exemple 21 |
|---|---|---|
| Quantité de $C_3A$ pur ajoutée (mg/litre) | 29,7 | 0 |
| Quantité de $Ca(OH)_2$ ajoutée (mg/litre) | 3,5 | 0 |
| Quantité de $C_4A$ ($C_3A.CaO$) ajoutée (mg/litre) | 0 | 35,3 |
| Rapport molaire global $Al/NO_3$ | 2 | 2 |
| Rapport molaire global $Ca/NO_3$ | 3,5 | 4 |
| Durée du traitement (minutes) | 180 | 90 |
| Concentration en nitrates résiduels (mg/litre) | 572 | 410 |
| Rendement (%) | 81 | 86 |

**Exemples 22 à 24**

On épure des solutions aqueuses polluées en ions nitrates et d'autres ions en employant le réactif identifié par la référence "M" dans les exemples 10 et 11.

Les exemples 22 à 24 ont été réalisés sur des solutions aqueuses comprenant majoritairement, avant traitement, 3 g/litre de $NO_3$.

La méthode d'épuration est la même dans chacun de ces exemples, à savoir :
- rapport molaire global $Al/NO_3$ égal à 2
- rapport molaire global $Ca/NO_3$ égal à 4

Dans le tableau XIII suivant, on a reporté les autres ions présents en forte proportion dans les solutions à traiter, ainsi que les résultats de l'épuration.

| Exemple | Nature des ions présents en forte proportion | Quantité de Y (mg/litre) | Durée du traitement (minutes) | Rendement d'épuration en $NO_3$ | Rendement d'épuration en Y |
|---|---|---|---|---|---|
| 22 | Chlorure | 1000 | 120 | 70 % | 52 % |
| 23 | Phosphate | 1000 | 120 | 78 % | 100 % |
| 24 | Sulfate | 1000 | 120 | 68 % | 99 % |

**Revendications**

1. Procédé d'épuration des solutions aqueuses polluées en ions nitrates, caractérisé en ce qu'il consiste à précipiter des nitro-aluminates de calcium hydratés, doubles ou mixtes, tels que notamment le mononitroaluminate de calcium hydraté, par addition, dans les solutions à traiter, d'au moins un agent faisant apport de l'élément aluminium et d'au moins un agent faisant apport de l'élément calcium, le rapport molaire global de l'élément aluminium sur nitrate, $Al/NO_3$, étant supérieur à 1, le rapport molaire global de calcium

sur nitrate, $Ca/NO_3$, étant supérieur à 2, et en ce que la réaction de précipitation est effectuée sous agitation, à pH basique.

2. Procédé selon la revendication 1, caractérisé en ce que la réaction de précipitation est effectuée à température ambiante.

3. Procédé selon la revendication 1 ou 2, caractérisé en ce que la réaction de précipitation est effectuée à un pH supérieur à 10,5.

4. Procédé selon l'une des revendications 1 à 3, caractérisé en ce que l'agent faisant apport de l'élément aluminium est choisi parmi les aluminates alcalins.

5. Procédé selon l'une des revendications 1 à 3, caractérisé en ce que l'agent faisant apport de l'élément aluminium est choisi parmi les aluminates de calcium.

6. Procédé selon la revendication 5, caractérisé en ce que l'agent faisant apport de l'élément aluminium est apporté par des produits comprenant $C_3A$ et/ou $C_{12}A_7$, mis en oeuvre seuls ou en combinaison avec d'autres composés.

7. Procédé de traitement des solutions et suspensions renfermant de l'azote sous forme ammoniacale selon l'une des revendications 1 à 6, caractérisé en ce que l'on effectue successivement les étapes suivantes :
   1) on effectue la transformation en nitrates de l'azote ammoniacal, présent dans les solutions à traiter par voie biochimique, en présence d'oxygène.
   2) ensuite, dès lors que la majorité de l'azote ammoniacal est transformé en nitrates, on ajoute à la solution à traiter un ou plusieurs aluminates de calcium de sorte que le rapport molaire global d'aluminium sur nitrate, $Al/NO_3$, soit supérieur à 1 et que le rapport molaire global de calcium sur nitrate, $Ca/NO_3$, soit supérieur à 2 et on ajoute, si nécessaire, de la chaux et/ou un autre agent basique pour ajuster le pH à une valeur basique, de préférence à une valeur supérieure à 10,5 et on effectue la réaction de précipitation sous agitation et à une température ambiante.
   3) On recueille, après séparation, une suspension épaisse ou un solide qui sont avantageusement utilisés comme amendement et engrais pour les sols agricoles.
   4) On recueille enfin un effluent liquide appauvri en nitrates.

8. Procédé selon la revendication 7, caractérisé en ce que la solution à traiter est portée à un pH basique par ajout d'hydroxyde de potassium.

9. Procédé selon la revendication 7 ou 8, caractérisé en ce que, avant de précipiter des nitro-aluminates de calcium hydratés, doubles ou mixtes, soit avant ou après l'étape (1) de nitrification, on prépare, au moins partiellement, les matières solides comprises dans la solution à traiter, généralement par floculation suivie d'une filtration et/ou décantation.

10. Procédé selon la revendication 9, caractérisé en ce que la séparation des matières solides est effectuée avant l'étape (1) de nitrification.

11. Procédé selon l'une des revendications 1 à 6, caractérisé en ce que la solution à traiter est une eau polluée en nitrates, tel qu'un effluent d'industrie ou une eau résiduaire urbaine, et en ce que :
   1) on ajoute, à la solution à traiter, un ou plusieurs aluminate de calcium et, si nécessaire, de la chaux et/ou un autre agent basique pour ajuster le pH à une valeur basique, de préférence supérieure à 10,5, et tel que le rapport molaire de l'élément aluminium sur nitrate $Al/NO_3$ soit supérieur à 1 et que le rapport molaire global de calcium sur nitrate, $Ca/NO_3$, soit supérieur à 2 ;
   2) on effectue la réaction de précipitation sous agitation et à température ambiante;
   3) à l'issue de cette réaction, on soumet la suspension obtenue à une opération de décantation et/ou de filtration, après adjonction éventuelle d'un agent floculant ;
   4) puis, si nécessaire, on neutralise le filtrat obtenu pour précipiter l'alumine en solution sous la forme d'hydroxyde insoluble.
   5) pour finir, on décante et/ou filtre la nouvelle suspension obtenue pour obtenir une eau purifiée qui peut être rejetée dans l'environnement sans risque de pollution.

12. Procédé selon la revendication 11, caractérisé en ce que la solution à traiter est une eau polluée, telle qu'une eau provenant d'aquaculture ou une eau résiduaire urbaine comprenant de l'azote ammoniacal, et en ce que, préalablement à l'élimination des nitrates, on prévoit une opération de nitrification de cette solution.

13. Procédé selon la revendication 11 ou 12, caractérisé en ce que, préalablement à l'addition d'aluminate de calcium, on ajoute un agent basique pour diminuer la concentration des cations peu solubles sous la forme d'hydroxydes.

14. Procédé selon l'une des revendications 11 à 13, caractérisé en ce que, préalablement à l'addition d'aluminate de calcium, on ajoute un agent faisant apport de l'élément calcium pour diminuer la concentration des anions peu solubles sous la forme de sels de calcium.

15. Procédé selon l'une des revendications 11 à 14, caractérisé en ce que l'on diminue simultanément les anions peu solubles sous la forme de sels de calcium et les cations peu solubles sous la forme d'hydroxydes par l'addition de chaux.

16. Procédé selon l'une des revendications 11 à 15, caractérisé en ce que le filtrat obtenu à l'issue de l'étape (4) est neutralisé à l'aide de $CO_2$.

## Patentansprüche

1. Verfahren zur Reinigung von durch Nitrationen verunreinigten wässrigen Lösungen, dadurch gekennzeichnet, daß es darin besteht, daß hydrierte Kalziumnitroaluminate, zweiteilig oder gemischt, wie insbesondere hydriertes Kalzium-Mononitroaluminat, ausgefällt werden, durch Hinzufügung zu den zu behandelnden Lösungen von wenigstens einem Mittel, das einen Beitrag vom Element Aluminium liefert, und von wenigstens einem Mittel, das einen Beitrag vom Element Kalzium liefert, wobei das Gesamt-Molverhältnis des Elements Aluminium zu Nitrat, $Al/NO_3$, über 1 liegt, und das Gesamt-Molverhältnis des Kalziums zum Nitrat, $Al/NO_3$, über 2 liegt, und daß die Ausfäll-Reaktion unter Bewegung bei einem basischen pH-Wert bewirkt wird.

2. Verfahren nach Anspruch 1, dadurch gekennzeichnet, daß die Ausfäll-Reaktion bei Umgebungstemperatur bewirkt wird.

3. Verfahren nach Anspruch 1 oder 2, dadurch gekennzeichnet, daß die Ausfäll-Reaktion bei einem pH-Wert höher als 10,5 bewirkt wird.

4. Verfahren nach einem der Ansprüche 1 - 3, dadurch gekennzeichnet, daß das Mittel, das einen Beitrag vom Element Aluminium liefert, unter den alkalischen Aluminaten ausgewählt ist.

5. Verfahren nach einem der Ansprüche 1 - 3, dadurch gekennzeichnet, daß das Mittel, das einen Beitrag vom Element Aluminium liefert, unter den Kalzium-Aluminaten ausgewählt ist.

6. Verfahren nach Anspruch 5, dadurch gekennzeichnet, daß das Mittel, das einen Beitrag vom Element Aluminium liefert, durch Produkte erbracht wird, die $C_3A$ und/oder $C_{12}A_7$ aufweisen, die allein oder in Kombination mit anderen Verbindungen gebraucht werden.

7. Verfahren zur Behandlung von Lösungen und Suspensionen, die Stickstoff in ammoniakalischer Form aufweisen, gemäß einem der Ansprüche 1 - 6, dadurch gekennzeichnet, daß nacheinander die folgenden Schritte durchgeführt werden:
   1) Man bewirkt die Umwandlung des Ammoniakstickstoffs , der in den zu behandelnden Lösungen vorhanden ist, auf biochemischen Wege bei Anwesenheit von Sauerstoff in Nitrate.
   2) Dann, sobald der meiste Ammoniakstickstoff in Nitrate umgewandelt ist, fügt man der zu behandelnden Lösung ein oder mehrere Kalziumaluminate derart zu, daß das Gesamt-Molverhältnis von Aluminium zu Nitrat, $Al/NO_3$, höher als 1 liegt und daß das Gesamt-Molverhältnis von Kalzium zu Nitrat, $Ca/NO_3$, höher als 2 liegt, und man fügt, falls notwendig, Kalk und/oder ein anderes basisches Mittel hinzu, um den pH-Wert auf einen basischen Wert, vorzugsweise auf einen Wert höher als 10,5, einzustellen, und man bewirkt die Ausfällreaktion unter Bewegung und bei einer Umgebungstemperatur.
   3) Nach Separation sammelt man eine dickflüssige Suspension oder einen Festkörper, die vorteilhaft

EP 0 494 836 B1

als Bodenverbesserungs- und Düngemittel für landwirtschaftliche Böden benutzt werden.
4) Schließlich sammelt man einen flüssigen, um Nitrate verminderten Abgang.

8. Verfahren nach Anspruch 7, dadurch gekennzeichnet, daß die zu behandelnde Lösung auf einen basischen pH-Wert durch Hinzufügung von Kaliumhydroxid gebracht wird.

9. Verfahren nach Anspruch 7 oder 8, dadurch gekennzeichnet, daß vor dem Ausfällen der hydrierten Kalziumnitroaluminate zweiteilig oder gemischt entweder vor oder nach dem Nitrifikations-Schritt (1) wenigstens teilweise die in der zu behandelnden Lösung enthaltenen Feststoffe im allgemeinen durch Flockung, gefolgt von einer Filtration und/oder Klärung, separiert werden.

10. Verfahren nach Anspruch 9, dadurch gekennzeichnet, daß die Separation der Feststoffe vor dem Nitrifikationsschritt (1) bewirkt wird.

11. Verfahren nach einem der Ansprüche 1 bis 6, dadurch gekennzeichnet, daß die zu behandelnde Lösung ein mit Nitraten verunreinigtes Wasser wie Industrieabgänge oder städtische Abwässer sind, und daß:
1) man der zu behandelnden Lösung ein oder mehrere Kalziumaluminate und, falls notwendig, Kalk und/oder ein anderes basisches Mittel hinzufügt, um den pH-Wert auf einen basischen Wert, vorzugsweise auf einen Wert höher als 10,5, einzustellen, derart, daß das Gesamt-Molverhältnis von Aluminium zu Nitrat, $Al/NO_3$, höher als 1 liegt und daß das Gesamt-Molverhältnis von Kalzium zu Nitrat, $Ca/NO_3$, höher als 2 liegt;
2) man die Ausfäll-Reaktion unter Bewegung und bei Umgebungstemperatur bewirkt;
3) am Ende dieser Reaktion man die erhaltene Suspension einem Klärungs- und/oder Filtrationsvorgang nach eventuellem Zusatz eines Flockungsmittels unterzieht;
4) dann, falls notwendig, man das erhaltene Filtrat neutralisiert, um in Lösung befindliches Aluminiumoxid in Form von unlösbaren Hydroxid auszufällen;
5) zum Abschluß man die neue erhaltene Suspension klärt und/oder filtert, um ein gereinigtes Wasser zu erhalten, das an die Umwelt ohne Verschmutzungsrisiko abgegeben werden kann.

12. Verfahren nach Anspruch 11, dadurch gekennzeichnet, daß die zu behandelnde Lösung ein verschmutztes Wasser ist, wie Wasser von der Seefischzucht oder städtisches Abwasser mit Ammoniakstickstoff, und daß man, vorrangig vor der Elimination der Nitrate, einen Nitrifikationsvorgang für die Lösung vorsieht.

13. Verfahren nach Anspruch 11 oder 12, dadurch gekennzeichnet, daß man vorrangig vor der Hinzufügung der Kalziumaluminate ein basisches Mittel hinzugibt, um die Konzentration der wenig löslichen Kationen in Form von Hydroxidenzu vermindern.

14. Verfahren nach einem der Ansprüche 11 bis 13, dadurch gekennzeichnet, daß vorrangig vor der Hinzufügung der Kalziumaluminate man ein Mittel, das einen Beitrag vom Element Kalzium liefert, hinzufügt, um die Konzentration der wenig löslichen Anionen in Form von Kalziumsalzen zu vermindern.

15. Verfahren nach einem der Ansprüche 11 bis 14, dadurch gekennzeichnet, daß man gleichzeitig die wenig löslichen Anionen in Form von Kalziumsalzenund die wenig löslichen Kationen in Form von Hydroxiden durch Hinzugabe von Kalk vermindert.

16. Verfahren nach einem der Ansprüche 11 bis 15, dadurch gekennzeichnet, daß das am Ende des Schrittes (4) erhaltene Filtrat mit Hilfe von $CO_2$ neutralisiert wird.


## Claims

1. Process for purifying aqueous solutions polluted by nitrate ions, characterized by the steps comprising precipitating hydrated double or mixed calcium nitroaluminates, such as particularly the hydrated calcium mononitroaluminate, by adding to the solutions to be treated at least one agent supplying the element aluminium and at least one agent supplying the element calcium. the overall mole ratio of the element aluminium to nitrate, $Al/NO_3$, being higher than 1 and the overall mole ratio of calcium to nitrate. $Ca/NO_3$, being higher than 2. and conducting the precipitation reaction with stirring at basic pH.

2. Process according to claim 1, characterized in that the precipitation reaction is performed at room tem-

22

perature.

3. Process according to claim 1 or 2, characterized in that the precipitation reaction is performed at a pH above 10.5.

4. Process according to any one of claims 1 to 3, characterized in that the agent supplying the element aluminium is selected from the alkali metal aluminates.

5. Process according to any one of claims 1 to 3, characterized in that the agent supplying the element aluminium is selected from the calcium aluminates.

6. Process according to claim 5, characterized in that the agent supplying the element aluminium is brought by products comprising $C_3A$ and/or $C_{12}A_7$, used alone or in combination with other compounds.

7. Process for the treatment of solutions and suspensions containing nitrogen in ammoniacal form according to any one of claims 1 to 6, characterized in that the following steps are performed successively:
   (1) the conversion to nitrates of the ammoniacal nitrogen present in the solutions to be treated is performed biochemically in the presence of oxygen;
   (2) then. once the majority of the ammoniacal nitrogen is converted to nitrates, one or many calcium aluminates are added to the solution to be treated, so that the overall mole ratio of the aluminium to nitrate, $Al/NO_3$, is higher than 1 and that the overall mole ratio of the calcium to nitrate $Ca/NO_3$ is higher than 2, and, optionally, lime and/or an other basic agent is added to adjust the pH to a basic value, preferably to a value above 10.5 and the precipitation reaction is performed with stirring and at room temperature;
   (3) after separation, a thick suspension or a solid is collected, which is suitable as an enriching agent and fertilizer for agricultural soils ; and
   (4) finally, a liquid effluent depleted in nitrates is collected.

8. Process according to claim 7, characterized in that the solution to be treated is brought to a basic pH by adding potassium hydroxide.

9. Process according to claim 7 or 8 characterized in that before the precipitation of hydrated double or mixed calcium nitroaluminates, either before or after the nitrification step (1), the solid matter included in the solution to be treated is separated at least partially generally by flocculation followed by a filtration operation and/or settling.

10. Process according to claim 9, characterized in that the separation of the solid matter is performed before the nitrification step (1).

11. Process according to any one of claims 1 to 6, characterized in that the solution to be treated is a water polluted with nitrates such as an industrial effluent or a municipal waste water and in that it comprises:
   (1) adding to the solution to be treated one or many calcium aluminates and, optionally, lime and/or another basic agent to adjust the pH to a basic value. preferably above 10.5 such that the mole ratio of the element aluminum to nitrate. $Al/NO_3$, is higher than 1 and that the overall mole ratio of calcium to nitrate. $Ca/NO_3$ is higher than 2:
   (2) conducting the precipitation reaction with stirring and at room temperature;
   (3) at the end of the reaction, subjecting resultant suspension to a settling and/or filtration operation after optionally adding a flocculation agent.
   (4) then optionally, neutralizing the obtained filtrate to precipitate the alumina in solution in the form of an insoluble hydroxide and
   (5) at the end settling and/or filtrating the obtained new suspension to obtain a purified water which can be discharged into the environment without risk of pollution.

12. Process according to claim 11, characterized in that the solution to be treated is a polluted water such as a water originating from waterculture or a municipal waste water containing ammoniacal nitrogen and in that prior to removal of the nitrates, the solution is subjected to nitrification.

13. Process according to claim 11 or 12, characterized in that prior to adding of calcium aluminate, a basic agent is added to decrease the concentration of cations which are only sparingly soluble in the form of

23

hydroxides.

14. Process according to any one of claims 11 to 13, characterized in that prior to the addition of calcium aluminate, an agent supplying the element calcium is added to decrease the concentration of anions which are only sparingly soluble in the form of calcium salts.

15. Process according to any one of claims 11 to 14, characterized in that the anions which are only sparingly soluble in the form of calcium salts and the cations which are only sparingly soluble in the form of hydroxides are decreased simultaneously by adding lime.

16. Process according to any one of claims 11 to 15, characterized in that the filtrate obtained at the end of step (4) is neutralized with $CO_2$.